(19) Europäisches Patentamt
European Patent Office
Office européen des brevets

(11) EP 3 950 831 B1

(12) EUROPEAN PATENT SPECIFICATION

(45) Date of publication and mention of the grant of the patent:
**16.09.2026 Bulletin 2026/38**

(21) Application number: **20782309.7**

(22) Date of filing: **23.03.2020**

(51) International Patent Classification (IPC):
***C08L 33/06*** $^{(2006.01)}$ ***C08L 33/26*** $^{(2006.01)}$

(52) Cooperative Patent Classification (CPC):
(C-Sets available)
**C08J 7/0427; C08F 265/06; H01M 50/417;**
C08J 2323/06; C08J 2433/04; Y02E 60/10 (Cont.)

(86) International application number:
**PCT/JP2020/012635**

(87) International publication number:
**WO 2020/203396 (08.10.2020 Gazette 2020/41)**

(54) **SECONDARY CELL SEPARATOR COATING MATERIAL**

BESCHICHTUNGSMATERIAL FÜR SEKUNDÄRBATTERIESEPARATOREN

MATÉRIAU DE REVÊTEMENT POUR SÉPARATEUR DE BATTERIE SECONDAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2019 JP 2019066495**

(43) Date of publication of application:
**09.02.2022 Bulletin 2022/06**

(73) Proprietor: **Mitsui Chemicals, Inc.**
**Tokyo 104-0028 (JP)**

(72) Inventors:
- **KAGAWA, Yasuyuki**
  **Sodegaura-shi, Chiba 299-0265 (JP)**
- **UENARI, Takahiro**
  **Sodegaura-shi, Chiba 299-0265 (JP)**
- **YOSHIMURA, Toshihiro**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(56) References cited:
**WO-A1-2017/104554** **WO-A1-2018/043192**
**JP-A- 2010 159 415** **JP-A- 2013 004 229**
**JP-A- 2015 088 253** **JP-A- 2016 072 247**
**JP-A- 2018 067 406** **JP-A- 2018 067 406**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 265/06, C08F 220/1804, C08F 220/14, C08F 220/1811, C08F 220/20;**
**C08F 265/06, C08F 220/56, C08F 220/06, C08F 220/20;**
C08F 220/1804, C08F 220/14, C08F 220/1811, C08F 220/20;
C08F 220/56, C08F 220/06, C08F 220/20

## Description

### TECHNICAL FIELD

The present invention relates to an ingredient for a secondary cell separator coating material, a method for producing an ingredient for a secondary cell separator coating material, a secondary cell separator coating material, a secondary cell separator, a method for producing a secondary cell separator, a secondary cell, and a resin composition, to be more specific, to an ingredient for a secondary cell separator coating material, a method for producing an ingredient for a secondary cell separator coating material, a secondary cell separator coating material containing the ingredient for a secondary cell separator coating material, a secondary cell separator including a coating film of the secondary cell separator coating material, a method for producing a secondary cell separator, a secondary cell including the secondary cell separator, and a resin composition.

### BACKGROUND ART

Traditionally, a secondary cell is equipped with a separator for separating a positive electrode from a negative electrode, and allowing ions to pass through an electrolytic solution.

As such a separator, for example, a polyolefin porous film is known.

Since the separator may short-circuit between the positive electrode and the negative electrode when its shape changes due to shrinkage by heat, heat resistance is required. Therefore, a heat resistant coating layer may be provided in the separator.

In addition, when the separator is immersed in the electrolytic solution, and there is no solvent resistance in the heat resistant coating layer, the heat resistant coating layer coated on the separator may peel off. Therefore, the heat resistant coating layer is required to have electrolytic solution resistance and adhesive properties.

As a coating material for forming such a heat resistant coating layer, for example, a binder composition for an electric storage device is known which includes a polymer having a first repeating unit derived from an unsaturated carboxylic acid ester having an alicyclic hydrocarbon group and a second repeating unit derived from an $\alpha$, $\beta$-unsaturated nitrile compound (ref: for example, Patent Document 1).

JP 2016 072247 A describes a separator for a power storage device that comprises at least a base material including a porous film, and a thermoplastic polymer layer formed in at least a partial region of at least one face of the base material. After immersing the separator in an electrolytic solution, the aperture ratio in a projection plane per unit area of the surface of the thermoplastic polymer layer is 1-20%.

JP 2018 067406 A describes a dispersant composition for a secondary battery slurry that contains: a polymer composition (A); and a component (B) that is at least one selected from an aldehyde compound composition (B1) represented by the formula $R^1CHO$ $R^1$ is a hydrogen atom, an alkyl group, an alkenyl group, an alkanol group or an aryl group and a specific ether compound composition (B2).

JP2017212090 discloses a binder composition for an electric storage device comprising a resin containing a repeating unit having an alicyclic hydrocarbon group, the resin having an average molecular weight (Mw) of less than 10,000.

### Citation List

#### Patent Document

Patent Document 1: Japanese Unexamined Patent Publication No. 2014-225465

### SUMMARY OF THE INVENTION

#### PROBLEM TO BE SOLVED BY THE INVENTION

Currently, we face social problems such as global warming and peak oil. Therefore, it is very difficult to continue to use engine vehicles permanently as before. In response to these two issues, companies worldwide have begun to aim for an EV (electric vehicle) society.

Due to this background, the demand for on-vehicle lithium-ion secondary cells is remarkably expanding with an increase in EV vehicles worldwide. Also, as the market scale of the lithium-ion secondary cells in 2020, the on-vehicle products are expected to exceed small-sized consumer products.

Compared with the small-sized consumer products, the on-vehicle lithium-ion secondary cells have higher capacity. The higher the capacity of the cell, the higher the risk of abnormal ignition. For this reason, the separator requires

excellent heat resistance and electrolytic solution resistance. Also, the heat resistant coating layer in the separator requires excellent adhesive properties.

The present invention provides an ingredient for a secondary cell separator coating material capable of exhibiting excellent heat resistance, electrolytic solution resistance, and adhesive properties; a method for producing the ingredient for a secondary cell separator coating material; a secondary cell separator coating material containing the ingredient for a secondary cell separator coating material; a secondary cell separator including a coating film of the secondary cell separator coating material; a method for producing the secondary cell separator; a secondary cell including the secondary cell separator; and a resin composition.

MEANS FOR SOLVING THE PROBLEM

The present invention [1] includes an ingredient for a secondary cell separator coating material including a first polymer obtained by polymerizing a first monomer component containing an alkyl (meth)acrylate and a vinyl monomer having a carbon ring structure, and a second polymer obtained by polymerizing a second monomer component containing a (meth)acrylamide, wherein the vinyl monomer having a carbon ring structure contains an alicyclic structure-containing vinyl monomer and an aromatic ring structure-containing vinyl monomer, wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and wherein a content ratio of the aromatic ring structure-containing vinyl monomer is 10 parts by mass or more and 90 parts by mass or less with respect to 100 parts by mass of the total amount of the alicyclic structure-containing vinyl monomer and the aromatic ring structure-containing vinyl monomer.

The present invention [2] includes a method for producing an ingredient for a secondary cell separator coating material including the steps of obtaining a first polymer obtained by polymerizing a first monomer component containing an alkyl (meth)acrylate and a vinyl monomer having a carbon ring structure, and obtaining a second polymer obtained by polymerizing a second monomer component containing a (meth)acrylamide in the presence of the first polymer, wherein the vinyl monomer having a carbon ring structure contains an alicyclic structure-containing vinyl monomer and an aromatic ring structure-containing vinyl monomer, wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and wherein a content ratio of the aromatic ring structure-containing vinyl monomer is 10 parts by mass or more and 90 parts by mass or less with respect to 100 parts by mass of the total amount of the alicyclic structure-containing vinyl monomer and the aromatic ring structure-containing vinyl monomer.

The present invention [3] includes a method for producing an ingredient for a secondary cell separator coating material including the steps of obtaining a second polymer obtained by polymerizing a second monomer component containing a (meth)acrylamide, and obtaining a first polymer obtained by polymerizing a first monomer component containing an alkyl (meth)acrylate and a vinyl monomer having a carbon ring structure in the presence of the second polymer, wherein the vinyl monomer having a carbon ring structure contains an alicyclic structure-containing vinyl monomer and an aromatic ring structure-containing vinyl monomer, wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and wherein a content ratio of the aromatic ring structure-containing vinyl monomer is 10 parts by mass or more and 90 parts by mass or less with respect to 100 parts by mass of the total amount of the alicyclic structure-containing vinyl monomer and the aromatic ring structure-containing vinyl monomer.

The present invention [4] includes a secondary cell separator coating material including the ingredient for a secondary cell separator coating material.

The present invention [5] includes a secondary cell separator including a porous film and a coating film of the coating material for a separator disposed on at least one surface of the porous film.

The present invention [6] includes a method for producing a secondary cell separator including a step of applying the coating material for a separator to at least one surface of a porous film.

The present invention [7] includes a secondary cell including a positive electrode, a negative electrode, and the secondary cell separator disposed between the positive electrode and the negative electrode.

The present invention [8] includes a resin composition including a first polymer obtained by polymerizing a first monomer component containing an alkyl (meth)acrylate and a vinyl monomer having a carbon ring structure, and a second polymer obtained by polymerizing a second monomer component containing a (meth)acrylamide, wherein the vinyl monomer having a carbon ring structure contains an alicyclic structure-containing vinyl monomer and an aromatic ring structure-containing vinyl monomer, wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and wherein a content ratio of the

aromatic ring structure-containing vinyl monomer is 10 parts by mass or more and 90 parts by mass or less with respect to 100 parts by mass of the total amount of the alicyclic structure-containing vinyl monomer and the aromatic ring structure-containing vinyl monomer.

## EFFECT OF THE INVENTION

The ingredient for a secondary cell separator coating material of the present invention includes a first polymer obtained by polymerizing a first monomer component containing an alkyl (meth)acrylate and a vinyl monomer having a carbon ring structure, and a second polymer obtained by polymerizing a second monomer component containing a (meth) acrylamide, wherein the vinyl monomer having a carbon ring structure contains an alicyclic structure-containing vinyl monomer and an aromatic ring structure-containing vinyl monomer, wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and wherein a content ratio of the aromatic ring structure-containing vinyl monomer is 10 parts by mass or more and 90 parts by mass or less with respect to 100 parts by mass of the total amount of the alicyclic structure-containing vinyl monomer and the aromatic ring structure-containing vinyl monomer. Therefore, a coating film of a secondary cell separator coating material containing the ingredient for a secondary cell separator coating material has excellent adhesive properties, and a secondary cell separator including the coating film has excellent heat resistance and electrolytic solution resistance.

The method for producing an ingredient for a secondary cell separator coating material of the present invention includes the steps of obtaining a first polymer obtained by polymerizing a first monomer component containing an alkyl (meth)acrylate and a vinyl monomer having a carbon ring structure, and obtaining a second polymer obtained by polymerizing a second monomer component containing a (meth)acrylamide in the presence of the first polymer, or the steps of obtaining a second polymer obtained by polymerizing a second monomer component containing a (meth) acrylamide, and obtaining a first polymer obtained by polymerizing a first monomer component containing an alkyl (meth) acrylate and a vinyl monomer having a carbon ring structure in the presence of the second polymer, wherein the vinyl monomer having a carbon ring structure contains an alicyclic structure-containing vinyl monomer and an aromatic ring structure-containing vinyl monomer, wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and wherein a content ratio of the aromatic ring structure-containing vinyl monomer is 10 parts by mass or more and 90 parts by mass or less with respect to 100 parts by mass of the total amount of the alicyclic structure-containing vinyl monomer and the aromatic ring structure-containing vinyl monomer.

Therefore, a coating film of a secondary cell separator coating material containing the ingredient for a secondary cell separator coating material obtained by this method has excellent adhesive properties, and a secondary cell separator including the coating film has excellent heat resistance and electrolytic solution resistance.

The secondary cell separator coating material of the present invention contains the ingredient for a secondary cell separator coating material of the present invention. Therefore, a coating film of the secondary cell separator coating material has excellent adhesive properties, and a secondary cell separator including the coating film has excellent heat resistance and electrolytic solution resistance.

The secondary cell separator of the present invention includes a coating film of the secondary cell separator coating material of the present invention. Therefore, in the secondary cell separator, the coating film has excellent adhesive properties, and the secondary cell separator has excellent heat resistance and electrolytic solution resistance.

The method for producing a secondary cell separator of the present invention includes a step of applying a coating material for a separator of the present invention to at least one surface of a porous film. Therefore, it is possible to produce a coating film having excellent adhesive properties, and also produce a secondary cell separator having excellent heat resistance, electrolytic solution resistance, and ion permeability.

The secondary cell of the present invention includes the secondary cell separator of the present invention. Therefore, it has excellent heat resistance, electrolytic solution resistance, and power generation efficiency.

The resin composition of the present invention includes a first polymer obtained by polymerizing a first monomer component containing an alkyl (meth)acrylate and an alicyclic structure-containing vinyl monomer, and a second polymer obtained by polymerizing a second monomer component containing a (meth)acrylamide, wherein the vinyl monomer having a carbon ring structure contains an alicyclic structure-containing vinyl monomer and an aromatic ring structure-containing vinyl monomer, wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and wherein a content ratio of the aromatic ring structure-containing vinyl monomer is 10 parts by mass or more and 90 parts by mass or less with respect to 100 parts by mass of the total amount of the alicyclic structure-containing vinyl monomer and the aromatic ring structure-containing

vinyl monomer. Therefore, it has excellent electrolytic solution resistance, heat resistance, and adhesive properties with a polyolefin porous film.

DESCRIPTION OF EMBODIMENTS

An ingredient for a secondary cell separator coating material of the present invention includes a first polymer and a second polymer.

The first polymer is a polymer obtained by polymerizing a first monomer component containing an alkyl (meth) acrylate (excluding a vinyl monomer having a carbon ring structure; hereinafter, the same), and a vinyl monomer having a carbon ring structure, wherein the vinyl monomer having a carbon ring structure contains an alicyclic structure-containing vinyl monomer and an aromatic ring structure-containing vinyl monomer, wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and wherein a content ratio of the aromatic ring structure-containing vinyl monomer is 10 parts by mass or more and 90 parts by mass or less with respect to 100 parts by mass of the total amount of the alicyclic structure-containing vinyl monomer and the aromatic ring structure-containing vinyl monomer.

The first monomer component contains, as an essential component, the alkyl (meth)acrylate and the vinyl monomer having a carbon ring structure. The (meth)acrylic includes acrylic and methacrylic (hereinafter, the same).

When the first monomer component contains the vinyl monomer having a carbon ring structure, a coating film (described later) of a secondary cell separator coating material (described later) containing the ingredient for a secondary cell separator coating material has excellent adhesive properties, and a secondary cell separator (described later) including the coating film (described later) has excellent electrolytic solution resistance.

Examples of the alkyl (meth)acrylate include alkyl (meth)acrylates having an alkyl portion having 1 to 12 carbon atoms including alkyl (meth)acrylates having an alkyl portion having 1 to 4 carbon atoms such as methyl (meth)acrylate, ethyl (meth)acrylate, isopropyl (meth)acrylate, n-butyl (meth)acrylate, isobutyl (meth)acrylate, and t-butyl (meth)acrylate and alkyl (meth)acrylates having an alkyl portion having 5 to 12 carbon atoms such as n-amyl (meth)acrylate, isoamyl (meth)acrylate, n-hexyl (meth)acrylate, 2-ethylhexyl (meth)acrylate, octyl (meth)acrylate, decyl (meth)acrylate, dodecyl (meth)acrylate, and octadecyl (meth)acrylate. Preferably, an alkyl (meth)acrylate having an alkyl portion having 1 to 4 carbon atoms, an alkyl (meth)acrylate having an alkyl portion having 5 to 12 carbon atoms, or a combination of these are used; more preferably, an alkyl (meth)acrylate having an alkyl portion having 1 to 4 carbon atoms is used alone, and an alkyl (meth)acrylate having an alkyl portion having 5 to 12 carbon atoms is used alone; further more preferably, a methyl (meth)acrylate, an n-butyl (meth)acrylate, or a combination of these are used, or a 2-ethylhexyl (meth)acrylate is used alone; particularly preferably, an n-butyl acrylate is used alone, a combination of a methyl methacrylate and an n-butyl acrylate is used, and a 2-ethylhexyl methacrylate is used alone.

When the methyl (meth)acrylate and the n-butyl (meth)acrylate are used in combination, a content ratio of the methyl (meth)acrylate is, for example, 30 parts by mass or more, preferably 40 parts by mass or more, and for example, 60 parts by mass or less, and a content ratio of the n-butyl (meth)acrylate is, for example, 40 parts by mass or more, and for example, 70 parts by mass or less, preferably 60 parts by mass or less with respect to 100 parts by mass of the total amount of the methyl (meth)acrylate and the n-butyl (meth)acrylate.

The vinyl monomer having a carbon ring structure includes an alicyclic structure-containing vinyl monomer and an aromatic ring structure-containing vinyl monomer. The carbon ring structure is a structure in which all of the ring constituting atoms are made of carbon, and examples thereof include an alicyclic structure and an aromatic ring structure.

Examples of the alicyclic structure-containing vinyl monomer include a monocyclic alicyclic structure-containing vinyl monomer, a bicyclic alicyclic structure-containing vinyl monomer, and a polycyclic alicyclic structure-containing vinyl monomer.

The monocyclic alicyclic structure-containing vinyl monomer is a vinyl monomer having one alicyclic structure, and examples thereof include cyclopentyl (meth)acrylate, cyclohexyl (meth)acrylate, cycloheptyl (meth)acrylate, 4-methylcyclohexyl (meth)acrylate, 3,3,5-trimethylcyclohexyl (meth)acrylate, cyclooctyl (meth)acrylate, cyclodecyl (meth)acrylate, and menthyl (meth)acrylate.

The bicyclic alicyclic structure-containing vinyl monomer is a vinyl monomer having two alicyclic structures, and examples thereof include norbornyl (meth)acrylate, decahydronaphthyl (meth)acrylate, bicycloundecyl (meth)acrylate, and isobornyl (meth)acrylate.

The polycyclic alicyclic structure-containing vinyl monomer is a vinyl monomer having three or more alicyclic structures, and examples thereof include tricyclo[5.2.1.$0^{2,6}$]decyl (meth)acrylate, tricyclo[5.2.1.$0^{2,6}$]deca-3-yl (meth) acrylate, 2-adamantyl (meth)acrylate, 2-(2-methyladamantyl) (meth)acrylate, 2-(2-ethyladamantyl) (meth)acrylate, 3-cholestanyl (meth)acrylate, 3-cholesteryl (meth)acrylate, 3-lanostanyl (meth)acrylate, 3-estranyl (meth)acrylate, 1,4-cyclohexanedimethanol mono(meth)acrylate, dicyclopentenyloxyethyl (meth)acrylate, 1-(3-hydroxyadamantyl) (meth) acrylate, 1-(5-hydroxyadamantyl) (meth)acrylate, and 1-(3,5-dihydroxyadamantyl) (meth)acrylate.

As the alicyclic structure-containing vinyl monomer, preferably, a monocyclic alicyclic structure-containing vinyl monomer and a bicyclic alicyclic structure-containing vinyl monomer are used; more preferably, a cyclohexyl (meth) acrylate and an isobornyl (meth)acrylate are used; further more preferably, a cyclohexyl methacrylate and an isobornyl methacrylate are used; particularly preferably, from the viewpoint of improving the adhesive properties of the coating film (described later) of the secondary cell separator coating material (described later) containing the ingredient for a secondary cell separator coating material, an isobornyl methacrylate is used.

The aromatic ring structure-containing vinyl monomer is a vinyl monomer having an aromatic ring structure (for example, a benzene ring), and examples thereof include aromatic vinyl monomers such as styrene, α-methylstyrene, p-methylstyrene, vinyltoluene, and chlorostyrene, and more preferably, a styrene is used.

An alicyclic structure-containing vinyl monomer and an aromatic ring structure-containing vinyl monomer are used in combination.

A content ratio of the alicyclic structure-containing vinyl monomer is 10 parts by mass or more, preferably 20 parts by mass or more, and 90 parts by mass or less, preferably 60 parts by mass or less, more preferably 40 parts by mass or less, and a content ratio of the aromatic ring structure-containing vinyl monomer is 10 parts by mass or more, preferably 40 parts by mass or more, more preferably 60 parts by mass or more, and 90 parts by mass or less, preferably 80 parts by mass or less with respect to 100 parts by mass of the total amount of the alicyclic structure-containing vinyl monomer and the aromatic ring structure-containing vinyl monomer.

Further, the first monomer component may also contain, as an optional component, a copolymerizable monomer (hereinafter, referred to as a first copolymerizable monomer) which is copolymerizable with the alkyl (meth)acrylate and the vinyl monomer having a carbon ring structure.

Examples of the first copolymerizable monomer include a functional group-containing vinyl monomer, vinyl esters, an N-substituted unsaturated carboxylic acid amide, a heterocyclic vinyl compound, a vinylidene halide compound, α-olefins, and dienes.

Examples of the functional group-containing vinyl monomer include a carboxyl group-containing vinyl monomer, a hydroxyl group-containing vinyl monomer, an amino group-containing vinyl monomer, a glycidyl group-containing vinyl monomer, a cyano group-containing vinyl monomer, a sulfonic acid group-containing vinyl monomer and a salt thereof, an acetoacetoxy group-containing vinyl monomer, and a phosphate group-containing compound.

Examples of the carboxyl group-containing vinyl monomer include monocarboxylic acids such as (meth)acrylic acid, dicarboxylic acids such as itaconic acid, maleic acid, fumaric acid, itaconic anhydride, maleic anhydride, and fumaric anhydride, or a salt thereof.

Examples of the hydroxyl group-containing vinyl monomer include 2-hydroxyethyl (meth)acrylate and a 2-hydroxypropyl (meth)acrylate.

Examples of the amino group-containing vinyl monomer include 2-aminoethyl (meth)acrylate, 2-(N-methylamino)ethyl (meth)acrylate, and 2-(N,N-dimethylamino)ethyl (meth)acrylate.

An example of the glycidyl group-containing vinyl monomer includes a glycidyl (meth)acrylate.

An example of the cyano group-containing vinyl monomer includes a (meth)acrylonitrile.

Examples of the sulfonic acid group-containing vinyl monomer include allylsulfonate, methallylsulfonate, and acrylamide t-butylsulfonate. Further, examples of the salt thereof include alkali metal salts such as sodium salt and potassium salt, and ammonium salts of the above-described sulfonic acid group-containing vinyl monomer. Specific examples thereof include sodium allylsulfonate, sodium methallylsulfonate, and ammonium methallylsulfonate.

An example of the acetoacetoxy group-containing vinyl monomer includes an acetoacetoxyethyl (meth)acrylate.

An example of the phosphoric acid group-containing compound includes a 2-methacryloyloxyethyl acid phosphate.

Examples of the vinyl esters include a vinyl acetate and a vinyl propionate.

An example of the N-substituted unsaturated carboxylic acid amide includes an N-methylol (meth)acrylamide.

An example of the heterocyclic vinyl compound includes a vinylpyrrolidone.

Examples of the vinylidene halide compound include a vinylidene chloride and a vinylidene fluoride.

Examples of the α-olefins include an ethylene and a propylene.

An example of the dienes includes a butadiene.

Further, as the first copolymerizable monomer, a cross-linkable vinyl monomer may be also used.

Examples of the cross-linkable vinyl monomer include vinyl monomers having two or more vinyl groups such as methylene bis(meth)acrylamide, divinylbenzene, polyethylene glycol chain-containing di(meth)acrylate, trimethylolpropane tetraacrylate, pentaerythritol triacrylate, and pentaerythritol tetraacrylate.

These first copolymerizable monomers may be used alone or in combination of two or more.

Preferably, as the first copolymerizable monomer, a functional group-containing vinyl monomer is used, more preferably, a carboxyl group-containing vinyl monomer is used, a hydroxyl group-containing vinyl monomer is used, further more preferably, a (meth)acrylic acid and a 2-hydroxylethyl (meth)acrylate are used, particularly preferably, a methacrylic acid and a 2-hydroxylethyl methacrylate are used.

Also, the first monomer component is preferably substantially free of a cyano group-containing vinyl monomer (specifically, (meth)acrylonitrile).

Substantially free of a cyano group-containing vinyl monomer means that a ratio of the cyano group-containing vinyl monomer is, for example, 2.0% by mass or less, preferably 1.0% by mass or less with respect to the first monomer component.

From the viewpoint of improving the electrolytic solution resistance of the secondary cell separator (described later), a formulation in which the cyano group-containing vinyl monomer is blended into the first monomer component is also considered. When the cyano group-containing vinyl monomer is blended, the adhesive properties of the coating film (described later) of the secondary cell separator coating material (described later) may decrease. Therefore, the first monomer component preferably does not contain the cyano group-containing vinyl monomer.

In the first monomer component, a content ratio of the alkyl (meth)acrylate is, for example, 30 parts by mass or more, preferably 40 parts by mass or more, preferably 50 parts by mass or more, and for example, 95 parts by mass or less, preferably 90 parts by mass or less, more preferably 80 parts by mass or less with respect to 100 parts by mass of the first monomer component.

Further, a content ratio of the alkyl (meth)acrylate is, for example, 20 parts by mass or more, preferably 30 parts by mass or more, preferably 40 parts by mass or more, and for example, 98 parts by mass or less, preferably 90 parts by mass or less, more preferably 80 parts by mass or less with respect to 100 parts by mass of the total amount of the alkyl (meth) acrylate and the vinyl monomer having a carbon ring structure.

Further, a content ratio of the vinyl monomer having a carbon ring structure is, for example, 3 parts by mass or more, preferably 8 parts by mass or more, more preferably 15 parts by mass or more, further more preferably 20 parts by mass or more, and for example, 70 parts by mass or less, preferably 60 parts by mass or less with respect to 100 parts by mass of the first monomer component.

When the content ratio of the vinyl monomer having a carbon ring structure is the above-described lower limit or more, the coating film (described later) of the secondary cell separator coating material (described later) containing the ingredient for a secondary cell separator coating material has excellent adhesive properties, and the secondary cell separator (described later) including the coating film (described later) has excellent electrolytic solution resistance.

When the content ratio of the vinyl monomer having a carbon ring structure is the above-described upper limit or less, film formability is improved, and the coating film (described later) of the secondary cell separator coating material (described later) containing the ingredient for a secondary cell separator coating material has excellent adhesive properties.

Further, a content ratio of the vinyl monomer having a carbon ring structure is, for example, 2 parts by mass or more, preferably 10 parts by mass or more, preferably 20 parts by mass or more, and for example, 80 parts by mass or less, preferably 70 parts by mass or less, more preferably 60 parts by mass or less with respect to 100 parts by mass of the total amount of the alkyl (meth)acrylate and the vinyl monomer having a carbon ring structure.

In addition, when the first monomer component contains the first copolymerizable monomer, a content ratio of the first copolymerizable monomer is, for example, 0.5 parts by mass or more, preferably 3 parts by mass or more, and for example, 20 parts by mass or less, preferably 10 parts by mass or less with respect to 100 parts by mass of the first monomer component.

In other words, the first monomer component may be a component composed of the alkyl (meth)acrylate and the vinyl monomer having a carbon ring structure without containing the first polymerizable monomer, or may be a component composed of the alkyl (meth)acrylate, the vinyl monomer having a carbon ring structure, and the first copolymerizable monomer. Preferably, the first monomer component is a component composed of the alkyl (meth)acrylate, the vinyl monomer having a carbon ring structure, and the first copolymerizable monomer.

Then, the first polymer is a polymer obtained by polymerizing the above-described first monomer component by a method to be described later.

The first polymer thus obtained relatively has hydrophobicity with respect to the second polymer.

Further, a glass transition temperature of the first polymer is, for example, -20°C or more, preferably 0°C or more, preferably 15°C or more, and for example, 60°C or less, preferably 35°C or less.

The glass transition temperature is obtained by calculation according to the formula of FOX.

The second polymer is a polymer obtained by polymerizing a second monomer component containing a (meth) acrylamide.

The second monomer component contains the (meth)acrylamide as an essential component.

When the second monomer component contains the (meth)acrylamide, the secondary cell separator (described later) obtained by using the secondary cell separator coating material (described later) containing the ingredient for a secondary cell separator coating material has excellent heat resistance.

As the (meth)acrylamide, preferably, a methacrylamide is used.

When the second monomer component contains the methacrylamide, the secondary cell separator (described later) obtained by using the secondary cell separator coating material (described later) containing the ingredient for a

secondary cell separator coating material has further more excellent heat resistance.

Further, the second monomer component may contain, as an optional component, a copolymerizable monomer which is copolymerizable with the (meth)acrylamide (hereinafter, referred to as a second copolymerizable monomer).

Examples of the second copolymerizable monomer include the above-described alkyl (meth)acrylate, the above-described functional group-containing vinyl monomer, the above-described vinyl esters, the above-described aromatic vinyl monomer, the above-described N-substituted unsaturated carboxylic acid amide, the above-described heterocyclic vinyl compound, the above-described vinylidene halide compound, the above-described $\alpha$-olefins, the above-described dienes, and the above-described cross-linkable vinyl monomer.

These second copolymerizable monomers may be used alone or in combination of two or more.

As the second copolymerizable monomer, preferably, a functional group-containing vinyl monomer is used, more preferably, a carboxyl group-containing vinyl monomer, a hydroxyl group-containing vinyl monomer, or a combination of these are used.

When the second monomer component contains the carboxyl group-containing vinyl monomer and the hydroxyl group-containing vinyl monomer, among others, when it contains the carboxyl group-containing vinyl monomer, dispersion stability is improved, and admixture stability of the ingredient for a secondary cell separator coating material with an inorganic filler (described later) becomes excellent.

Further, as the second copolymerizable monomer, particularly preferably, a combination of a methacrylic acid and a 2-hydroxylethylmethacrylate is used.

In the second monomer component, a content ratio of the (meth)acrylamide is, for example, 60 parts by mass or more, preferably 70 parts by mass or more, and for example, 100 parts by mass or less, preferably 99 parts by mass or less with respect to 100 parts by mass of the second monomer component.

When the content ratio of the (meth)acrylamide is the above-described lower limit or more, the secondary cell separator (described later) obtained by using the secondary cell separator coating material (described later) containing the ingredient for a secondary cell separator coating material has excellent heat resistance.

When the content ratio of the (meth)acrylamide is the above-described upper limit or less, the functional group-containing vinyl monomer can be introduced into the second monomer component, the dispersion stability is improved, and the admixture stability of the ingredient for a secondary cell separator coating material with the inorganic filler (described later) becomes excellent.

Further, a content ratio of the second copolymerizable monomer is, for example, 0 parts by mass or more, preferably 1 part by mass or more, and for example, 40 parts by mass or less, preferably 30 parts by mass or less with respect to 100 parts by mass of the second monomer component.

In other words, the second monomer component may be a component composed of the (meth)acrylamide without containing the second copolymerizable monomer, or may be a component composed of the (meth)acrylamide and the second copolymerizable monomer. Preferably, the second monomer component is a component composed of the (meth)acrylamide and the second copolymerizable monomer.

Then, the second polymer is a polymer obtained by polymerizing the above-described second monomer component by a method to be described later.

The second polymer thus obtained relatively has hydrophilicity with respect to the first polymer.

Next, a method for producing an ingredient for a secondary cell separator coating material is described.

Specifically, examples of the method for producing an ingredient for a secondary cell separator coating material include a method (first method) in which the first monomer component is polymerized to obtain the first polymer, and then, the second monomer component is polymerized in the presence of the first polymer, and a method (second method) in which the second monomer component is polymerized to obtain the second polymer, and then, the first monomer component is polymerized in the presence of the second polymer.

First, the first method is described.

The first method includes a step (first step) of obtaining the first polymer obtained by polymerizing the first monomer component containing the alkyl (meth)acrylate and the vinyl monomer having a carbon ring structure, and a step (second step) of obtaining the second polymer obtained by polymerizing the second monomer component containing a (meth)acrylamide in the presence of the first polymer, wherein the vinyl monomer having a carbon ring structure contains an alicyclic structure-containing vinyl monomer and an aromatic ring structure-containing vinyl monomer, wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and wherein a content ratio of the aromatic ring structure-containing vinyl monomer is 10 parts by mass or more and 90 parts by mass or less with respect to 100 parts by mass of the total amount of the alicyclic structure-containing vinyl monomer and the aromatic ring structure-containing vinyl monomer.

In the first step, the first monomer component is first polymerized.

Specifically, the first monomer component and a polymerization initiator are blended into water, and the first monomer component is polymerized in water.

The polymerization initiator is not particularly limited, and examples thereof include water-soluble initiators such as persulfate (ammonium persulfate, potassium persulfate, and the like), hydrogen peroxide, organic hydroperoxide, and 4,4'-azobis(4-cyanovaleric acid) acid; oil-soluble initiators such as benzoyl peroxide, azobisisobutyronitrile, and the like; and further, redox-based initiators. Preferably, a water-soluble initiator is used, more preferably, a persulfate is used, further more preferably, a potassium persulfate is used. These polymerization initiators may be used alone or in combination of two or more.

Further, a mixing ratio of the polymerization initiator is appropriately set in accordance with the purpose and the application, and is, for example, 0.05 parts by mass or more, and for example, 10 parts by mass or less, preferably 5 parts by mass or less with respect to 100 parts by mass of the first monomer component.

As polymerization conditions, a polymerization temperature is, for example, 30°C or more, preferably 50°C or more, and for example, 95°C or less, preferably 85°C or less under a normal pressure. Further, the polymerization time is, for example, 1 hour or more, preferably 2 hours or more, and for example, 30 hours or less, preferably 20 hours or less.

In addition, if necessary, in the polymerization of the first polymer, an emulsifier (surfactant) may be blended from the viewpoint of improving production stability.

Examples of the emulsifier include anionic surfactants such as sulfate ester of higher alcohol, alkylbenzene sulfonate (dodecylbenzene sulfonate and the like), aliphatic sulfonate, alkyl diphenyl ether sulfonate, and ammonium lauryl sulfate, and nonionic surfactants such as alkyl ester-type, alkyl phenyl ether-type, and alkyl ether-type polyethylene glycol, and preferably, an anionic surfactant is used, more preferably, an alkyl diphenyl ether sulfonate is used.

A mixing ratio of the emulsifier is appropriately set in accordance with the purpose and the application, and is, for example, 0.01 parts by mass or more, and for example, 5 parts by mass or less, preferably 1 part by mass or less with respect to 100 parts by mass of the first monomer component.

In addition, in the polymerization of the first polymer, from the viewpoint of improving the production stability, for example, a known additive may be blended in an appropriate ratio. Examples thereof include pH adjusting agents, metal ion sealing agents such as ethylenediaminetetraacetic acid and a salt thereof, and molecular weight adjusting agents (chain transfer agents) such as mercaptans and low molecular halogen compounds.

Further, before the polymerization of the first polymer or after the polymerization of the first polymer, a neutralizing agent such as ammonia may be blended, and a pH thereof may be adjusted within a range of 7 or more and 11 or less.

Thus, the first monomer component is polymerized to obtain the first polymer.

Also, the first polymer is obtained as a dispersion liquid which is dispersed in water.

In the dispersion liquid, the solid content concentration of the first polymer is, for example, 5% by mass or more, and for example, 50% by mass or less.

Then, in the second step, the second monomer component is polymerized in the presence of the first polymer.

Specifically, the second monomer component and the above-described polymerization initiator are blended into an aqueous dispersion liquid containing the first polymer, and then, preferably, the obtained mixture is matured.

The polymerization initiator is not particularly limited, and an example thereof includes the same polymerization initiator as that used in the polymerization of the first monomer component described above, and preferably, a water-soluble initiator is used, more preferably, a persulfate is used, further more preferably, an ammonium persulfate is used. These polymerization initiators may be used alone or in combination of two or more.

Further, a mixing ratio of the polymerization initiator is appropriately set in accordance with the purpose and the application, and is, for example, 0.05 parts by mass or more, and 5 parts by mass or less with respect to 100 parts by mass of the second monomer component.

As polymerization conditions, a polymerization temperature is, for example, 30°C or more, preferably 50°C or more, and for example, 95°C or less, preferably 85°C or less under a normal pressure. Further, the polymerization time is, for example, 0.5 hours or more, preferably 1.5 hours or more, and for example, 20 hours or less, preferably 10 hours or less.

The maturing time is, for example, 0.5 hours or more, preferably 1.5 hours or more, and for example, 6 hours or less, preferably 3 hours or less.

In addition, in the polymerization of the second polymer, from the viewpoint of improving the production stability, if necessary, the above-described emulsifier (surfactant) and additive may be blended at an appropriate ratio.

Further, before the polymerization of the second polymer or after the polymerization of the second polymer, a neutralizing agent such as ammonia may be blended, and a pH thereof may be adjusted within a range of 7 or more and 11 or less.

Thus, the second monomer component is polymerized to obtain the second polymer.

As a result, a dispersion liquid containing the first polymer and the second polymer (ingredient for a secondary cell separator coating material) is obtained.

In addition, when the second monomer component is polymerized on the surface of the first polymer, the ingredient for a secondary cell separator coating material may be obtained as core shell particles in which the first polymer (core) is covered with the second polymer (shell).

In the dispersion liquid, the content (solid content concentration of the dispersion liquid) of the ingredient for a

secondary cell separator coating material is, for example, 5% by mass or more, and for example, 50% by mass or less.

Further, a pH value of the dispersion liquid is, for example, 6 or more, and for example, 11 or less.

When the above-described pH value is within the above-described range, the dispersion stability is improved, and also the admixture stability of the ingredient for a secondary cell separator coating material with the inorganic filler (described later) is ensured.

Next, the second method is described.

The second method includes a step (third step) of obtaining the second polymer obtained by polymerizing the second monomer component containing the (meth)acrylamide, and a step (fourth step) of obtaining the first polymer obtained by polymerizing the first monomer component containing the alkyl (meth)acrylate and the vinyl monomer having a carbon ring structure in the presence of the second polymer, wherein the vinyl monomer having a carbon ring structure contains an alicyclic structure-containing vinyl monomer and an aromatic ring structure-containing vinyl monomer, wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and wherein a content ratio of the aromatic ring structure-containing vinyl monomer is 10 parts by mass or more and 90 parts by mass or less with respect to 100 parts by mass of the total amount of the alicyclic structure-containing vinyl monomer and the aromatic ring structure-containing vinyl monomer.

In the third step, first, the second monomer component is polymerized.

Specifically, the second monomer component and the above-described polymerization initiator are blended into water, and the second monomer component is polymerized in water.

As the polymerization initiator, preferably, a water-soluble initiator is used, more preferably, a persulfate is used, further more preferably, an ammonium persulfate is used.

These polymerization initiators may be used alone or in combination of two or more.

Further, a mixing ratio of the polymerization initiator is appropriately set in accordance with the purpose and the application, and is, for example, 0.05 parts by mass or more, and for example, 10 parts by mass or less, preferably 5 parts by mass or less with respect to 100 parts by mass of the second monomer component.

As polymerization conditions, a polymerization temperature is, for example, 30°C or more, preferably 50°C or more, and for example, 95°C or less, preferably 85°C or less under a normal pressure. Further, the polymerization time is, for example, 0.5 hours or more, preferably 1.5 hours or more, and for example, 20 hours or less, preferably 10 hours or less.

In addition, in the polymerization of the second polymer, from the viewpoint of improving the production stability, if necessary, the above-described emulsifier (surfactant) may be blended.

A mixing ratio of the emulsifier is appropriately set in accordance with the purpose and the application.

In addition, in the polymerization of the second polymer, from the viewpoint of improving the production stability, for example, a known additive may be blended at an appropriate ratio. Examples thereof include pH adjusting agents, metal ion sealing agents such as ethylenediaminetetraacetic acid and a salt thereof, and molecular weight adjusting agents (chain transfer agents) such as mercaptans and low molecular halogen compounds.

Further, before the polymerization of the second polymer or after the polymerization of the second polymer, a neutralizing agent such as ammonia may be blended, and a pH thereof may be adjusted within a range of 7 or more and 11 or less.

Thus, the second monomer component is polymerized to obtain the second polymer.

Further, the second polymer is obtained as an aqueous solution.

In the aqueous solution containing the second polymer, the solid content concentration of the second polymer is, for example, 5% by mass or more, and for example, 50% by mass or less.

Then, in the fourth step, the first monomer component is polymerized in the presence of the second polymer.

Specifically, the first monomer component and the above-described polymerization initiator are blended into the aqueous solution containing the second polymer, and then, preferably, the obtained mixture is matured.

As the polymerization initiator, preferably, a water-soluble initiator is used, more preferably, a persulfate is used, further more preferably, a potassium persulfate is used.

These polymerization initiators may be used alone or in combination of two or more.

Further, a mixing ratio of the polymerization initiator is appropriately set in accordance with the purpose and the application, and is, for example, 0.05 parts by mass or more, and 10 parts by mass or less with respect to 100 parts by mass of the first monomer component.

As polymerization conditions, a polymerization temperature is, for example, 30°C or more, preferably 50°C or more, and for example, 95°C or less, preferably 85°C or less under a normal pressure. Further, the polymerization time is, for example, 0.5 hours or more, and for example, 20 hours or less, preferably 10 hours or less

The maturing time is, for example, 0.5 hours or more, preferably 1.5 hours or more, and for example, 6 hours or less.

In addition, in the polymerization of the first polymer, from the viewpoint of improving the production stability, if necessary, the above-described emulsifier (surfactant) and additive may be blended at an appropriate ratio.

As the emulsifier, preferably, an anionic surfactant is used, more preferably, an alkyldiphenylether sulfonate is used. These emulsifiers may be used alone or in combination of two or more.

Further, a mixing ratio of the emulsifier is appropriately set in accordance with the purpose and the application, and is, for example, 0.1 parts by mass or more, and for example, 5 parts by mass or less with respect to 100 parts by mass of the first monomer component.

Further, before the polymerization of the first polymer or after the polymerization of the first polymer, a neutralizing agent such as ammonia may be blended, and a pH thereof may be adjusted within a range of 7 or more and 11 or less.

Thus, the first monomer component is polymerized to obtain the first polymer.

As a result, a dispersion liquid containing the first polymer and the second polymer (ingredient for a secondary cell separator coating material) is obtained.

In addition, when the relatively hydrophobic first polymer is polymerized in the second polymer which is previously formed in water, the ingredient for a secondary cell separator coating material may be obtained as core-shell particles in which the first polymer (core) is covered with the second polymer (shell).

In the dispersion liquid, the content (solid content concentration of the dispersion liquid) of the ingredient for a secondary cell separator coating material is, for example, 5% by mass or more, and for example, 50% by mass or less.

Further, a pH value of the dispersion liquid is, for example, 6 or more, and for example, 11 or less.

When the above-described pH value is within the above-described range, the dispersion stability is improved, and also, the admixture stability of the ingredient for a secondary cell separator coating material with the inorganic filler (described later) is ensured.

The method for producing an ingredient for a secondary cell separator coating material is not limited to the above-described method, and, for example, the ingredient for a secondary cell separator coating material can be obtained by separately producing the first polymer and the second polymer by the above-described method and then, mixing them. Preferably, the ingredient for a secondary cell separator coating material is obtained by the first method or the second method, and more preferably, the ingredient for a secondary cell separator coating material is the core-shell particles obtained by the first method or the second method.

In the ingredient for a secondary cell separator coating material, the mass of the second polymer is 0.02 times or more, preferably 0.05 times or more, more preferably 0.1 times or more, further more preferably 0.13 times or more, particularly preferably 0.2 times or more, most preferably 0.4 times or more, and 5 times or less, preferably 3 times or less, more preferably 2 times or less, further more preferably 1 time or less the mass of the first polymer (second polymer/ first polymer).

When the mass of the second polymer is the above-described lower limit or more, the secondary cell separator (described later) obtained by using the secondary cell separator coating material (described later) containing the ingredient for a secondary cell separator coating material has excellent heat resistance and electrolyte solution resistance.

Also, when the mass of the second polymer is the above-described upper limit or less, the secondary cell separator (described later) obtained by using the secondary cell separator coating material (described later) containing the ingredient for a secondary cell separator coating material has excellent ion permeability.

In other words, by setting the mass of the second polymer within the above-described predetermined range, it is possible to improve the three of the heat resistance, the electrolytic solution resistance, and the ion permeability in a good balance.

The mass of the first polymer and the mass of the second polymer can be calculated from a charging amount of the first monomer component and the second monomer component. In other words, the mass of the second polymer described above means the mass of the second monomer component, and the mass of the first polymer described above means the mass of the first monomer component.

In addition, when the ingredient for a secondary cell separator coating material is particles, the average particle size thereof is, for example, 10 nm or more, preferably 100 nm or more, more preferably 300 nm or more, and for example, 3000 nm or less, preferably 2000 nm or less.

The above-described average particle size can be determined by measuring a particle size with a particle size measuring device (manufactured by Otsuka Electronics Co., Ltd., FPAR1000).

The secondary cell separator coating material of the present invention includes the above-described ingredient for a secondary cell separator coating material, and if necessary, an inorganic filler and a dispersant.

A mixing ratio of the ingredient for a secondary cell separator coating material is, for example, 0.1 parts by mass or more (solid content), and for example, 10 parts by mass or less (solid content) with respect to 100 parts by mass (solid content) of the total amount of the ingredient for a secondary cell separator coating material, the inorganic filler, and the dispersant (hereinafter, referred to as a coating material component for a secondary cell separator).

Examples of the inorganic filler include oxides such as alumina, silica, titania, zirconia, magnesia, ceria, yttria, zinc oxide, and iron oxide; nitrides such as silicon nitride, titanium nitride, and boron nitride; carbides such as silicon carbide and calcium carbonate; sulfides such as magnesium sulfate and aluminum sulfate; hydroxides such as aluminum hydroxide and aluminum hydroxide oxide; silicates such as talc, kaolinite, dickite, nacrite, halloysite, pyrophyllite,

montmorillonite, sericite, mica, amesite, bentonite, asbestos, zeolite, calcium silicate, magnesium silicate, diatomaceous earth, silica sand, and glass; and potassium titanate, and preferably an oxide and a hydroxide are used, more preferably, an aluminum oxide and an aluminum hydroxide oxide are used.

A mixing ratio of the inorganic filler is, for example, 50 parts by mass or more (solid content) and for example, 99.7 parts by mass or less (solid content) with respect to 100 parts by mass (solid content) of the coating material component for a secondary cell separator.

Examples of the dispersant include an ammonium polycarboxylate and a sodium polycarboxylate.

When the dispersant is the ammonium polycarboxylate, the ingredient for a secondary cell separator coating material and the inorganic filler described above can be uniformly dispersed, and a coating film (described later) having a uniform thickness can be obtained.

A mixing ratio of the dispersant is, for example, 0.1 parts by mass or more (solid content) and for example, 5 parts by mass or less (solid content) with respect to 100 parts by mass (solid content) of the coating material component for a secondary cell separator.

In order to obtain the secondary cell separator coating material, first, an inorganic filler and a dispersant are blended into water at the above-described ratio to prepare an inorganic filler dispersion liquid.

Then, the ingredient for a secondary cell separator coating material (or a dispersion liquid containing the ingredient for a secondary cell separator coating material) is blended into the inorganic filler dispersion liquid at the above-described ratio to be stirred.

A stirring method is not particularly limited, and examples thereof include ball mills, bead mills, planetary ball mills, vibrating ball mills, sand mills, colloidal mills, attritors, roll mills, high-speed impeller dispersion, dispersers, homogenizers, high-speed shock mills, ultrasonic dispersion, and mechanical stirring with stirring blades and the like.

Thus, the secondary cell separator coating material is obtained.

Also, the secondary cell separator coating material is obtained as a dispersion liquid which is dispersed in water.

In addition, if necessary, an additive may be blended into the secondary cell separator coating material at an appropriate ratio. Examples of the additive include hydrophilic resins, thickeners, wetting agents, defoaming agents, and PH adjusting agents.

These additives may be used alone or in combination of two or more.

The secondary cell separator coating material contains the above-described ingredient for a secondary cell separator coating material. Therefore, the coating film (described later) of the secondary cell separator coating material has excellent adhesive properties, and the secondary cell separator obtained by using the secondary cell separator coating material has excellent heat resistance and electrolytic solution resistance.

Then, the secondary cell separator coating material can be preferably used as the coating material of the secondary cell separator.

The secondary cell separator of the present invention can be produced by a producing method including a step of preparing a porous film and a step of applying the above-described coating material for a separator to at least one surface of the porous film.

In the step of preparing the porous film, a porous film is prepared.

Examples of the porous film include polyolefin porous films such as polyethylene and polypropylene, and aromatic polyamide porous films, and preferably, a polyolefin porous film is used.

A thickness of the porous film is, for example, 1 μm or more, preferably 5 μm or more, and for example, 40 μm or less, preferably 20 μm or less.

Next, in the step of applying above-described coating material for a separator to at least one surface of the porous film, a dispersion liquid of the above-described coating material for a separator is applied to at least one surface of the porous film, and then, if necessary, it is dried, thereby obtaining a coating film.

An application method is not particularly limited, and examples thereof include a gravure coater method, a small diameter gravure coater method, a reverse roll coater method, a transfer roll coater method, a kiss coater method, a dip coater method, a micro gravure coater method, a knife coater method, an air doctor method, a blade coater method, a rod coater method, a squeeze coater method, a cast coater method, a dye coater method, a screen printing method, and a spray application method.

As drying conditions, a drying temperature is, for example, 40°C or more, and for example, 80°C or less.

A thickness of the coating film is, for example, 1 μm or more, preferably 3 μm or more, and for example, 10 μm or less, preferably 8 μm or less.

Thus, the secondary cell separator including the porous film, and the coating film of the secondary cell separator coating material disposed on at least one surface of the porous film is produced.

In the above-described description, the coating film of the secondary cell separator coating material is disposed on at least one surface of the porous film. Alternatively, the above-described coating film can be also disposed on both surfaces of the porous film.

The secondary cell separator includes the coating film of the secondary cell separator coating material described

above. Therefore, the coating film has excellent adhesive properties, and also, the separator has excellent heat resistance and electrolytic solution resistance.

Then, the secondary cell separator can be preferably used as the separator of the secondary cell.

The secondary cell of the present invention includes a positive electrode, a negative electrode, the above-described secondary cell separator which is disposed between the positive electrode and the negative electrode, and an electrolyte which is impregnated into the positive electrode, the negative electrode, and the above-described secondary cell separator.

An example of the positive electrode includes a known electrode including a positive electrode collector and a positive electrode active material which is laminated on the positive electrode collector.

Examples of the positive electrode collector include electrically conductive materials such as aluminum, titanium, stainless steel, nickel, calcined carbon, electrically conductive polymers, and electrically conductive glass.

The positive electrode active material is not particularly limited, and examples thereof include known positive electrode active materials such as a lithium-containing transition metal oxide, a lithium-containing phosphate, and a lithium-containing sulfate.

These positive electrode active materials may be used alone or in combination of two or more.

An example of the negative electrode includes a known electrode including a negative electrode collector and a negative electrode active material which is laminated on the negative electrode collector.

Examples of the negative electrode collector include electrically conductive materials such as copper and nickel.

The negative electrode active material is not particularly limited, and examples thereof include carbon active materials such as graphite, soft carbon, and hard carbon.

These negative electrode active materials may be used alone or in combination of two or more.

When a lithium ion cell is used as a secondary cell, an example of the electrolyte includes a solution in which a lithium salt is dissolved in a carbonate compound such as ethylene carbonate (EC), propylene carbonate (PC), and ethyl methyl carbonate (EMC).

Then, in order to produce the secondary cell, for example, a separator of the secondary cell is sandwiched between the positive electrode and the negative electrode to be housed in a cell casing (cell), and the electrolyte is injected into the cell casing. Thus, the secondary cell can be obtained.

The secondary cell includes the above-described secondary cell separator. Therefore, it has excellent heat resistance, electrolytic solution resistance, and power generation efficiency.

Further, the resin composition of the present invention includes the first polymer obtained by polymerizing the first monomer component containing the alkyl (meth)acrylate and a vinyl monomer having a carbon ring structure, and the second polymer obtained by polymerizing the second monomer component containing the (meth)acrylamide, wherein the vinyl monomer having a carbon ring structure contains an alicyclic structure-containing vinyl monomer and an aromatic ring structure-containing vinyl monomer, wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and wherein a content ratio of the aromatic ring structure-containing vinyl monomer is 10 parts by mass or more and 90 parts by mass or less with respect to 100 parts by mass of the total amount of the alicyclic structure-containing vinyl monomer and the aromatic ring structure-containing vinyl monomer.

The first polymer is a polymer obtained by polymerizing the first monomer component containing the alkyl (meth) acrylate and the vinyl monomer having a carbon ring structure.

The first monomer component contains, as an essential component, the above-described alkyl (meth)acrylate and the above-described vinyl monomer having a carbon ring structure, and as an optional component, the above-described first copolymerizable monomer.

A content ratio of the alkyl (meth)acrylate and the first copolymerizable monomer is the same as that of the alkyl (meth)acrylate and the first copolymerizable monomer of the first monomer component in the ingredient for a secondary cell separator coating material described above.

In addition, a content ratio of the alicyclic structure-containing vinyl monomer is the same as that of the vinyl monomer having a carbon ring structure of the first monomer component in the ingredient for a secondary cell separator coating material described above.

Then, the first polymer is a polymer obtained by polymerizing the first monomer component by the above-described method.

The second polymer is a polymer obtained by polymerizing the second monomer component containing the (meth)acrylamide.

The second monomer component contains, as an essential component, the above-described (meth)acrylamide, and as an optional component, the above-described second copolymerizable monomer.

A content ratio of the (meth)acrylamide and the second copolymerizable monomer is the same as the content ratio of the (meth)acrylamide and the second copolymerizable monomer of the second monomer component in the

ingredient for a secondary cell separator coating material described above.

Then, the second polymer is a polymer obtained by polymerizing the second monomer component by the above-described method.

The resin composition can be obtained by the first method or the second method described above.

Thus, the resin composition is obtained.

The resin composition can be, for example, used for a heat-sensitive paper and an optical use, or as a ingredient coating material for a food packaging material in addition to the ingredient for a secondary cell separator coating material.

Then, since the resin composition includes the first polymer obtained by polymerizing the first monomer component containing the alkyl (meth)acrylate and the vinyl monomer having a carbon ring structure and the second polymer obtained by polymerizing the second monomer component containing the (meth)acrylamide, it has excellent oil resistance, solvent resistance, heat resistance, and adhesive properties with a polyolefin substrate.

## Examples

The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS". All designations of "part" or "parts" and "%" mean part or parts by mass and % by mass, respectively, unless otherwise particularly specified in the following description.

### 1. Preparation of Ingredient for Separator Coating Material

#### Production Example 1

A separable flask equipped with a stirrer and a reflux condenser was charged with 263 parts by weight of distilled water and 0.3 parts of sodium alkyl diphenyl ether disulfonate to be replaced with a nitrogen gas, and then, the temperature thereof was increased to 80°C. Then, 0.5 parts of potassium persulfate was added thereto, the following first monomer component, emulsifier, and water were continuously added over a period of three hours, the obtained mixture was further retained for three hours to adjust a pH thereof to 7.0 with ammonia water, and the polymerization was completed. An appropriate amount of water was added thereto to obtain a dispersion liquid containing a first polymer having a solid content of 25.0%.

| | |
|---|---|
| n-butyl acrylate | 50.0 parts |
| methyl methacrylate | 40.0 parts |
| isobornyl methacrylate | 5.0 parts |
| 2-hydroxyethyl methacrylate | 5.0 parts |
| sodium alkyldiphenylether disulfonate | 0.2 parts |
| distilled water | 40.0 parts |

After 500 parts of dispersion liquid containing the obtained first polymer was replaced with a nitrogen gas, the temperature thereof was increased to 80°C. Next, 0.25 parts of ammonium persulfate was added, and then, a mixture of the following second monomer component and water was continuously added over a period of two hours while stirring, then, the obtained mixture was matured at the same temperature for two hours to adjust a pH thereof to 9.0 with ammonia water, and the polymerization of the second monomer component was completed. Thereafter, an appropriate amount of water was added thereto to obtain a dispersion liquid (ingredient for separator coating material) containing a first polymer and a second polymer. The solid content concentration of the dispersion liquid was 20.0% by mass.

| | |
|---|---|
| methacrylamide | 40.0 parts |
| methacrylic acid | 5.0 parts |
| 2-hydroxyethyl methacrylate | 5.0 parts |
| distilled water | 200.0 parts |

Production Example 2

A separable flask equipped with a stirrer and a reflux condenser was charged with 80 parts by weight of distilled water to be replaced with a nitrogen gas, and then, the temperature thereof was increased to 80°C. Then, 0.25 parts of potassium persulfate was added thereto, the following second monomer component, 25% ammonia water, and water were continuously added over a period of three hours, the obtained mixture was further retained for four hours, and the polymerization was completed. An appropriate amount of water was added thereto to obtain an aqueous solution containing a second polymer having a solid content of 15.0%.

| | |
|---|---|
| methacrylamide | 45.0 parts |
| methacrylic acid | 5.0 parts |
| 2-hydroxyethyl methacrylate | 5.0 parts |
| 25% ammonia water | 2.0 parts |
| distilled water | 200.0 parts |

The aqueous solution containing the obtained second polymer (335 parts) was charged with 0.3 parts by weight of sodium alkyl diphenyl ether disulfonate to be replaced with a nitrogen gas, and then, the temperature thereof was increased to 80°C. Then, 0.5 parts of potassium persulfate was added thereto, the following first monomer component, emulsifier, and water were continuously added over a period of one hour, the obtained mixture was matured at the same temperature for five hours to adjust a pH thereof to 8.0 with ammonia water, and the polymerization of the first monomer was completed. Then, an appropriate amount of water was added thereto to obtain a dispersion liquid (ingredient for separator coating material) containing a first polymer and a second polymer. The solid content concentration of the dispersion liquid was 20.0% by mass.

| | |
|---|---|
| n-butyl acrylate | 50.0 parts |
| methyl methacrylate | 40.0 parts |
| isobornyl methacrylate | 5.0 parts |
| 2-hydroxyethyl methacrylate | 5.0 parts |
| sodium alkyldiphenylether disulfonate | 0.2 parts |
| distilled water | 40.0 parts |

Production Examples 4 to 6

An ingredient for separator coating material was produced in the same manner as in Production Example 1, except that the mixing formulation was changed in accordance with the description of Table 1.

Production Examples 2 and 3, and 7 to 23, Production Comparative Examples 1 to 4

An ingredient for separator coating material was produced in the same manner as in Production Example 2, except that the mixing formulation was changed in accordance with the descriptions of Tables 1 and 2.

In Production Comparative Examples 3 and 4, the second polymer was not produced.

2. Production of Secondary Cell separator Coating Material and Secondary Cell Separator

Example 1 (Reference Example)

As an inorganic filler, 100 parts by mass of aluminum hydroxide oxide (manufactured by TAIMEI CHEMICALS Co., Ltd., Boehmite Grade C06, particle size: 0.7 μm) and as a dispersant, 1.0 part by mass (in terms of solid content) of aqueous solution of ammonium polycarboxylate (manufactured by SAN NOPCO LIMITED, SN Dispersant 5468) were uniformly dispersed in 110 parts by mass of water to obtain an inorganic filler dispersion liquid. Then, 25 parts by mass (that is, 5 parts by mass (in terms of solid content) of ingredient for separator coating material) of dispersion liquid (solid content concentration of 20%) produced in Production Example 1 was added to the inorganic filler dispersion liquid, and then, the obtained mixture was stirred for 15 minutes to prepare a secondary cell separator coating material.

Then, the above-described secondary cell separator coating material was applied onto the surface of the polyolefin resin porous film by using a wire bar. After the application, by drying at 50°C, a coating film of 5 μm was formed on

the surface of the polyolefin resin porous film.

Thus, a secondary cell separator was produced.

Examples 2 to 23 and Comparative Examples 1 to 4 (Examples 2-5 and 21-22 are Reference Examples)

A secondary cell separator was produced in the same manner as in Example 1, except that the mixing formulation was changed in accordance with the descriptions of Tables 1 and 2.

3. Evaluation

(Heat Resistance)

Each of the secondary cell separators of Examples and Comparative Examples was cut into a size of 5 cm× 5 cm as test pieces. After the test pieces were left to stand in an oven at 150°C for 1 hour, the length of each side was measured, and a thermal shrinkage rate was calculated. The superiority and inferiority of the heat resistance was evaluated in accordance with the following criteria. The results are shown in Tables 1 and 2.

A: the thermal shrinkage rate was below 3%.
B: the thermal shrinkage rate was 3% or more and below 5%.
C: the thermal shrinkage rate was 5% or more and below 10%.
D: the thermal shrinkage rate was 10% or more.

(Electrolytic Solution Resistance)

Each of the ingredient for a secondary cell separator coating material of Examples and Comparative Examples was applied to a tray made of polypropylene, dried at room temperature overnight, and further dried at room temperature for eight hours under a reduced pressure to obtain a film of 500 μm. The obtained film was left to stand in an ethylene carbonate (EC)/ ethyl methyl carbonate (EMC)= 1/ 1 (w/ w) solution at 90°C for seven hours, and the weight of the swollen film was measured. A weight ratio of the weight of the swollen film/weight of the film before swelling was calculated. In addition, the superiority and inferiority of the electrolytic solution resistance was evaluated in accordance with the following criteria. The results are shown in Tables 1 and 2.

A: the swelling rate was below 150%.
B: the swelling rate was 150% or more and below 200%.
C: the swelling rate was 200% or more and below 300%.
D: the swelling rate was 300% or more.

(Adhesive Properties)

Each of the secondary cell separators of Examples and Comparative Examples was cut into a size of 5 cm× 10 cm as test pieces. A 180° peel test was carried out by a method in conformity with JIS Z 1522. At that time, a pulling rate of the cellophane adhesive tape was set at 10 mm/min. The measurement was carried out three times, and an average value thereof was calculated. The superiority and inferiority of the adhesive properties was evaluated in accordance with the following criteria. The results are shown in Tables 1 and 2.

A: the average value of the bond strength was 200 N/m or more.
B: the average value of the bond strength was 100 N/m or more and below 200 N/m.
C: the average value of the bond strength was 40 N/m or more and below 100 N/m.
D: the average value of the bond strength was below 40 N/m.

(Ion Permeability)

The air permeability resistance of each of the secondary cell separators of Examples and Comparative Examples measured in conformity with JIS-P-8117 was obtained with an Oken type Air-Permeability Smoothness Tester manufactured by ASAGHI SEIKO CO., LTD. It was evaluated that the smaller the air permeability resistance was, the more excellent the ion permeability was. Also, the superiority and inferiority of the ion permeability was evaluated in accordance with the following criteria. The results are shown in Tables 1 and 2.

A: the air permeability resistance was below 180 s/100 mL.
B: the air permeability resistance was 180 s/100 mL or more and below 200 s/100 mL.
C: the air permeability resistance was 200 s/100 mL or more and below 300 s/100 mL.
D: the air permeability resistance was 300 s/100 mL or more.

[Table 1]

Table 1

| Examples·Comparative Examples | | | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 |
|---|---|---|---|---|---|---|---|---|---|---|---|---|---|---|---|---|---|
| Production Examples·Production Comparative Examples | | | | | Production Ex. 1 | Production Ex. 2 | Production Ex. 3 | Production Ex. 4 | Production Ex. 5 | Production Ex. 6 | Production Ex. 7 | Production Ex. 8 | Production Ex. 9 | Production Ex. 10 | Production Ex. 11 | Production Ex. 12 | Production Ex. 13 |
| Ingredient for Separator Coating Material | First Polymer | (Meth)acrylic Acid Ester | | n-butyl Acrylate | 50 | 50 | 50 | 45 | 45 | 45 | 40 | 40 | 40 | 0 | 0 | 0 | 40 |
| | | | | Methyl Methacrylate | 40 | 40 | 0 | 40 | 30 | 0 | 0 | 0 | 20 | 0 | 0 | 0 | 0 |
| | | | | 2-ethylhexyl Methacrylate | 0 | 0 | 0 | 0 | 0 | 0 | 0 | 0 | 0 | 70 | 65 | 65 | 0 |
| | | Vinyl Monomer Having Carbon Ring Structure | | Isoboronyl Methacrylate | 5 | 5 | 0 | 10 | 20 | 20 | 15 | 10 | 10 | 20 | 25 | 25 | 35 |
| | | | | Cyclohexyl Methacrylate | 0 | 0 | 0 | 0 | 0 | 0 | 0 | 0 | 0 | 0 | 0 | 0 | 0 |
| | | | | Styrene | 0 | 0 | 45 | 0 | 0 | 30 | 40 | 45 | 20 | 5 | 5 | 5 | 20 |
| | | First Copolymerizable Monomer | Carboxyl Group-Containing Vinyl Monomer | Methacrylic Acid | 0 | 0 | 0 | 0 | 0 | 0 | 0 | 0 | 0 | 0 | 0 | 5 | 0 |
| | | | Hydroxyl Group-Containing Vinyl Monomer | 2-hydroxyethyl Methacrylate | 5 | 5 | 5 | 5 | 5 | 5 | 5 | 5 | 5 | 5 | 5 | 0 | 5 |
| | | Glass Transition Temperature (°C) | | | 3 | 3 | 1 | 13 | 16 | 16 | 22 | 20 | 23 | 13 | 21 | 24 | 30 |
| | Second Polymer | (Meth)acrylamide | | Methacrylamide | 40 | 40 | 40 | 40 | 40 | 40 | 40 | 40 | 40 | 40 | 40 | 40 | 40 |
| | | Second Copolymerizable Monomer | Carboxyl Group-Containing Vinyl Monomer | Methacrylic Acid | 5 | 5 | 5 | 5 | 5 | 5 | 5 | 5 | 5 | 5 | 5 | 5 | 5 |
| | | | Hydroxyl Group-Containing Vinyl Monomer | 2-hydroxyethyl Methacrylate | 5 | 5 | 5 | 5 | 5 | 5 | 5 | 5 | 5 | 5 | 5 | 5 | 5 |
| | Second Polymer/First Polymer | | | | 0.5 | 0.5 | 0.5 | 0.5 | 0.5 | 0.5 | 0.5 | 0.5 | 0.5 | 0.5 | 0.5 | 0.5 | 0.5 |
| | Producing Method | | | | First Method | Second Method | Second Method | First Method | First Method | First Method | Second Method | Second Method | Second Method | Second Method | Second Method | Second Method | Second Method |
| Evaluation | Heat Resistance | | | | A | A | A | A | A | A | A | A | A | A | A | A | A |
| | Electrolytic Solution Resistance | | | | B | B | B | B | B | A | A | A | A | A | A | A | A |
| | Adhesive Properties | | | | B | B | B | A | A | A | A | A | A | A | A | A | A |
| | Ion Permeability | | | | B | B | B | B | B | B | B | B | B | B | B | B | B |

[Table 2]

Table 2

| Examples·Comparative Examples | | | | | Ex. 14 | Ex. 15 | Ex. 16 | Ex. 17 | Ex. 18 | Ex. 19 | Ex. 20 | Ex. 21 | Ex. 22 | Ex. 23 | Comparative Ex. 1 | Comparative Ex. 2 | Comparative Ex. 3 | Comparative Ex. 4 |
|---|---|---|---|---|---|---|---|---|---|---|---|---|---|---|---|---|---|---|
| Production Examples·Production Comparative Examples | | | | | Production Ex. 14 | Production Ex. 15 | Production Ex. 16 | Production Ex. 17 | Production Ex. 18 | Production Ex. 19 | Production Ex. 20 | Production Ex. 21 | Production Ex. 22 | Production Ex. 23 | Production Comparative Ex. 1 | Production Comparative Ex. 2 | Production Comparative Ex. 3 | Production Comparative Ex. 4 |
| Ingredient for Separator Coating Material | First Polymer | (Meth)acrylic Acid Ester | | n-butyl Acrylate | 0 | 0 | 0 | 0 | 45 | 45 | 45 | 40 | 50 | 45 | 0 | 40 | 75 | 45 |
| | | | | Methyl Methacrylate | 0 | 0 | 0 | 0 | 0 | 0 | 0 | 0 | 0 | 0 | 0 | 55 | 0 | 0 |
| | | | | 2-ethylhexyl Methacrylate | 65 | 65 | 65 | 65 | 0 | 0 | 0 | 0 | 0 | 0 | 0 | 0 | 0 | 0 |
| | | Vinyl Monomer Having Carbon Ring Structure | | Isoboronyl Methacrylate | 20 | 20 | 20 | 0 | 20 | 20 | 20 | 3 | 45 | 20 | 10 | 0 | 20 | 20 |
| | | | | Cyclohexyl Methacrylate | 0 | 0 | 0 | 20 | 0 | 0 | 0 | 0 | 0 | 0 | 0 | 0 | 0 | 0 |
| | | | | Styrene | 10 | 10 | 10 | 10 | 30 | 30 | 30 | 52 | 0 | 30 | 85 | 0 | 0 | 30 |
| | | First Copolymerizable Monomer | Carboxyl Group-Containing Vinyl Monomer | Methacrylic Acid | 0 | 0 | 0 | 0 | 0 | 0 | 0 | 0 | 0 | 0 | 0 | 0 | 0 | 0 |
| | | | Hydroxyl Group-Containing Vinyl Monomer | 2-hydroxyethyl Methacrylate | 5 | 5 | 5 | 5 | 5 | 5 | 5 | 5 | 5 | 5 | 5 | 5 | 5 | 5 |
| | | Glass Transition Temperature (°C) | | | 20 | 20 | 20 | 18 | 16 | 16 | 16 | 18 | 17 | 16 | 108 | 16 | -26 | 16 |
| | Second Polymer | (Meth)acrylamide | | Methacrylamide | 40 | 24 | 12 | 40 | 45 | 4 | 400 | 40 | 40 | 2.4 | 40 | 40 | 0 | 0 |
| | | Second Copolymerizable Monomer | Carboxyl Group-Containing Vinyl Monomer | Methacrylic Acid | 5 | 3 | 1.5 | 5 | 0 | 0.5 | 50 | 5 | 5 | 0.3 | 5 | 5 | 0 | 0 |
| | | | Hydroxyl Group-Containing Vinyl Monomer | 2-hydroxyethyl Methacrylate | 5 | 3 | 1.5 | 5 | 5 | 0.5 | 50 | 5 | 5 | 0.3 | 5 | 5 | 0 | 0 |
| | Second Polymer/First Polymer | | | | 0.5 | 0.3 | 0.15 | 0.5 | 0.5 | 0.05 | 5 | 0.5 | 0.5 | 0.03 | 0.5 | 0.5 | 0 | 0 |
| | Producing Method | | | | Second Method | Second Method | Second Method | Second Method | Second Method | Second Method | Second Method | Second Method | Second Method | Second Method | Second Method | Second Method | - | - |
| Evaluation | Heat Resistance | | | | A | B | B | A | A | C | A | A | A | C | A | A | D | D |
| | Electrolytic Solution Resistance | | | | A | A | A | A | A | A | A | C | A | B | B | D | B | B |
| | Adhesive Properties | | | | A | B | B | B | A | A | A | C | C | B | D | D | C | B |
| | Ion Permeability | | | | B | A | A | B | B | A | C | B | B | A | B | B | A | A |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

INDUSTRIAL APPLICATION

The ingredient for a secondary cell separator coating material, the method for producing a ingredient for a secondary cell separator coating material, the secondary cell separator coating material, the secondary cell separator, the method for producing a secondary cell separator, and the resin composition of the present invention can be preferably used for secondary cells and the like.

The secondary cell of the present invention can be preferably used for vehicles requiring heat resistance, electrolytic solution resistance, and power generation efficiency.

## Claims

**1.** A ingredient for a secondary cell separator coating material comprising:

a first polymer obtained by polymerizing a first monomer component containing an alkyl (meth)acrylate and a vinyl monomer having a carbon ring structure, and
a second polymer obtained by polymerizing a second monomer component containing a (meth)acrylamide,
wherein the vinyl monomer having a carbon ring structure contains an alicyclic structure-containing vinyl monomer and an aromatic ring structure-containing vinyl monomer,
wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and
wherein a content ratio of the aromatic ring structure-containing vinyl monomer is 10 parts by mass or more and 90 parts by mass or less with respect to 100 parts by mass of the total amount of the alicyclic structure-containing vinyl monomer and the aromatic ring structure-containing vinyl monomer.

**2.** The ingredient for a secondary cell separator coating material according to claim 1, wherein
the mass of the second polymer is 0.05 times or more and 5 times or less the mass of the first polymer.

**3.** The ingredient for a secondary cell separator coating material according to claim 1, wherein
a content ratio of the vinyl monomer having a carbon ring structure is 3 parts by mass or more and 70 parts by mass or less with respect to 100 parts by mass of the first monomer component.

**4.** The ingredient for a secondary cell separator coating material according to claim 1, wherein
a content ratio of the (meth)acrylamide is 60 parts by mass or more and 100 parts by mass or less with respect to 100 parts by mass of the second monomer component.

**5.** The ingredient for a secondary cell separator coating material according to claim 1, wherein
the second monomer component further contains a carboxyl group-containing vinyl monomer.

**6.** A method for producing an ingredient for a secondary cell separator coating material comprising the steps of:

obtaining a first polymer obtained by polymerizing a first monomer component containing an alkyl (meth)acrylate and a vinyl monomer having a carbon ring structure, and
obtaining a second polymer obtained by polymerizing a second monomer component containing a (meth) acrylamide in the presence of the first polymer,
wherein the vinyl monomer having a carbon ring structure contains an alicyclic structure-containing vinyl monomer and an aromatic ring structure-containing vinyl monomer,
wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and
wherein a content ratio of the aromatic ring structure-containing vinyl monomer is 10 parts by mass or more and 90 parts by mass or less with respect to 100 parts by mass of the total amount of the alicyclic structure-containing vinyl monomer and the aromatic ring structure-containing vinyl monomer.

7. A method for producing an ingredient for a secondary cell separator coating material comprising the steps of:

obtaining a second polymer obtained by polymerizing a second monomer component containing a (meth) acrylamide, and
obtaining a first polymer obtained by polymerizing a first monomer component containing an alkyl (meth)acrylate and a vinyl monomer having a carbon ring structure in the presence of the second polymer,
wherein the vinyl monomer having a carbon ring structure contains an alicyclic structure-containing vinyl monomer and an aromatic ring structure-containing vinyl monomer,
wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and
wherein a content ratio of the aromatic ring structure-containing vinyl monomer is 10 parts by mass or more and 90 parts by mass or less with respect to 100 parts by mass of the total amount of the alicyclic structure-containing vinyl monomer and the aromatic ring structure-containing vinyl monomer.

8. A secondary cell separator coating material comprising the ingredient for a secondary cell separator coating material according to claim 1.

9. The secondary cell separator coating material according to claim 8 further comprising an inorganic filler and a dispersant.

10. A secondary cell separator comprising:

a porous film and
a coating film of the coating material for a separator according to claim 8 disposed on at least one surface of the porous film.

11. A method for producing a secondary cell separator comprising a step of applying the coating material for a separator according to claim 8 to at least one surface of a porous film.

12. A secondary cell comprising:
a positive electrode, a negative electrode, and the secondary cell separator according to claim 10 disposed between the positive electrode and the negative electrode.

13. A resin composition comprising:

a first polymer obtained by polymerizing a first monomer component containing an alkyl (meth)acrylate and a vinyl monomer having a carbon ring structure, and
a second polymer obtained by polymerizing a second monomer component containing a (meth)acrylamide,
wherein the vinyl monomer having a carbon ring structure contains an alicyclic structure-containing vinyl monomer and an aromatic ring structure-containing vinyl monomer,
wherein a content ratio of the alicyclic structure-containing vinyl monomer is 10 parts by mass or more and 90 parts by mass or less with respect to 100 parts by mass of a total amount of the alicyclic structure-containing vinyl monomer and the aromatic ring structure-containing vinyl monomer, and
wherein a content ratio of the aromatic ring structure-containing vinyl monomer is 10 parts by mass or more and 90 parts by mass or less with respect to 100 parts by mass of the total amount of the alicyclic structure-containing vinyl monomer and the aromatic ring structure-containing vinyl monomer.

## Patentansprüche

1. Bestandteil für ein Beschichtungsmaterial für einen Sekundärzellseparator, umfassend:

ein erstes Polymer, erhalten durch Polymerisation einer ersten Monomerkomponente, die ein Alkyl(meth)acrylat und ein Vinylmonomer mit einer Kohlenstoffringstruktur enthält, und
ein zweites Polymer, erhalten durch Polymerisation einer zweiten Monomerkomponente, die ein (Meth)acrylamid enthält,
wobei das Vinylmonomer mit einer Kohlenstoffringstruktur ein Vinylmonomer mit alicyclischer Struktur und ein

Vinylmonomer mit aromatischer Ringstruktur enthält,
wobei das Gehaltsverhältnis des Vinylmonomers mit alicyclischer Struktur 10 Masseteile oder mehr und 90 Masseteile oder weniger, bezogen auf 100 Masseteile der Gesamtmenge des Vinylmonomers mit alicyclischer Struktur und des Vinylmonomers mit aromatischer Ringstruktur, beträgt, und
wobei das Gehaltsverhältnis des Vinylmonomers mit aromatischer Ringstruktur 10 Masseteile oder mehr und 90 Masseteile oder weniger, bezogen auf 100 Masseteile der Gesamtmenge des Vinylmonomers mit alicyclischer Struktur und des Vinylmonomers mit aromatischer Ringstruktur, beträgt.

**2.** Bestandteil für ein Beschichtungsmaterial für einen Sekundärzellseparator gemäß Anspruch 1, wobei die Masse des zweiten Polymers das 0,05-Fache oder mehr und das 5-Fache oder weniger der Masse des ersten Polymers beträgt.

**3.** Bestandteil für ein Beschichtungsmaterial für einen Sekundärzellseparator gemäß Anspruch 1, wobei das Gehaltsverhältnis des Vinylmonomers mit einer Kohlenstoffringstruktur 3 Masseteile oder mehr und 70 Masseteile oder weniger, bezogen auf 100 Masseteile der ersten Monomerkomponente, beträgt.

**4.** Bestandteil für ein Beschichtungsmaterial für einen Sekundärzellseparator gemäß Anspruch 1, wobei das Gehaltsverhältnis des (Meth)acrylamids 60 Masseteile oder mehr und 100 Masseteile oder weniger, bezogen auf 100 Masseteile der zweiten Monomerkomponente, beträgt.

**5.** Bestandteil für ein Beschichtungsmaterial für einen Sekundärzellseparator gemäß Anspruch 1, wobei die zweite Monomerkomponente ferner ein Carboxylgruppenhaltiges Vinylmonomer enthält.

**6.** Verfahren zur Herstellung eines Bestandteils für ein Beschichtungsmaterial für einen Sekundärzellseparator, umfassend die folgenden Schritte:

Erhalten eines ersten Polymers, durch Polymerisation einer ersten Monomerkomponente, die ein Alkyl(meth) acrylat und ein Vinylmonomer mit einer Kohlenstoffringstruktur enthält, und
Erhalten eines zweiten Polymers, durch Polymerisation einer zweiten Monomerkomponente, die ein (Meth) acrylamid enthält, in Gegenwart des ersten Polymers,
wobei das Vinylmonomer mit einer Kohlenstoffringstruktur ein Vinylmonomer mit alicyclischer Struktur und ein Vinylmonomer mit aromatischer Ringstruktur enthält,
wobei das Gehaltsverhältnis des Vinylmonomers mit alicyclischer Struktur 10 Masseteile oder mehr und 90 Masseteile oder weniger, bezogen auf 100 Masseteile der Gesamtmenge des Vinylmonomers mit alicyclischer Struktur und des Vinylmonomers mit aromatischer Ringstruktur, beträgt, und
wobei das Gehaltsverhältnis des Vinylmonomers mit aromatischer Ringstruktur 10 Masseteile oder mehr und 90 Masseteile oder weniger, bezogen auf 100 Masseteile der Gesamtmenge des Vinylmonomers mit alicyclischer Struktur und des Vinylmonomers mit aromatischer Ringstruktur, beträgt.

**7.** Verfahren zur Herstellung eines Bestandteils für ein Beschichtungsmaterial für einen Sekundärzellseparator, umfassend die folgenden Schritte:

Erhalten eines zweiten Polymers, durch Polymerisation einer zweiten Monomerkomponente, die ein (Meth) acrylamid enthält, und
Erhalten eines ersten Polymers, durch Polymerisation einer ersten Monomerkomponente, die ein Alkyl(meth) acrylat und ein Vinylmonomer mit einer Kohlenstoffringstruktur enthält, in Gegenwart des zweiten Polymers,
wobei das Vinylmonomer mit einer Kohlenstoffringstruktur ein Vinylmonomer mit alicyclischer Struktur und ein Vinylmonomer mit aromatischer Ringstruktur enthält,
wobei das Gehaltsverhältnis des Vinylmonomers mit alicyclischer Struktur 10 Masseteile oder mehr und 90 Masseteile oder weniger, bezogen auf 100 Masseteile der Gesamtmenge des Vinylmonomers mit alicyclischer Struktur und des Vinylmonomers mit aromatischer Ringstruktur, beträgt, und
wobei das Gehaltsverhältnis des Vinylmonomers mit aromatischer Ringstruktur 10 Masseteile oder mehr und 90 Masseteile oder weniger, bezogen auf 100 Masseteile der Gesamtmenge des Vinylmonomers mit alicyclischer Struktur und des Vinylmonomers mit aromatischer Ringstruktur, beträgt.

**8.** Beschichtungsmaterial für einen Sekundärzellseparator, das den Bestandteil für ein Beschichtungsmaterial für einen Sekundärzellseparator gemäß Anspruch 1 umfasst.

**9.** Beschichtungsmaterial für einen Sekundärzellseparator gemäß Anspruch 8, das ferner einen anorganischen Füllstoff und ein Dispergiermittel umfasst.

**10.** Sekundärzellseparator, umfassend:

einen porösen Film und
einen Beschichtungsfilm aus dem Beschichtungsmaterial für einen Separator gemäß Anspruch 8, der auf mindestens einer Oberfläche des porösen Films angeordnet ist.

**11.** Verfahren zur Herstellung eines Sekundärzellseparators, umfassend einen Schritt des Aufbringens des Beschichtungsmaterials für einen Separator gemäß Anspruch 8 auf mindestens eine Oberfläche eines porösen Films.

**12.** Sekundärzelle, umfassend:
eine positive Elektrode, eine negative Elektrode und den Sekundärzellseparator gemäß Anspruch 10, der zwischen der positiven Elektrode und der negativen Elektrode angeordnet ist.

**13.** Harzzusammensetzung, umfassend:

ein erstes Polymer, erhalten durch Polymerisation einer ersten Monomerkomponente, die ein Alkyl(meth)acrylat und ein Vinylmonomer mit einer Kohlenstoffringstruktur enthält, und
ein zweites Polymer, erhalten durch Polymerisation einer zweiten Monomerkomponente, die ein (Meth)acrylamid enthält,
wobei das Vinylmonomer mit einer Kohlenstoffringstruktur ein Vinylmonomer mit alicyclischer Struktur und ein Vinylmonomer mit aromatischer Ringstruktur enthält,
wobei das Gehaltsverhältnis des Vinylmonomers mit alicyclischer Struktur 10 Masseteile oder mehr und 90 Masseteile oder weniger, bezogen auf 100 Masseteile der Gesamtmenge des Vinylmonomers mit alicyclischer Struktur und des Vinylmonomers mit aromatischer Ringstruktur, beträgt, und
wobei das Gehaltsverhältnis des Vinylmonomers mit aromatischer Ringstruktur 10 Massenanteile oder mehr und 90 Massenanteile oder weniger, bezogen auf 100 Massenanteile der Gesamtmenge des Vinylmonomers mit alicyclischer Struktur und des Vinylmonomers mit aromatischer Ringstruktur, beträgt.

## Revendications

**1.** Ingrédient pour matériau de revêtement de séparateur de cellule secondaire comprenant :

un premier polymère obtenu par polymérisation d'un premier composant monomère contenant un (méth)acrylate d'alkyle et un monomère vinylique présentant une structure cyclique carbonée, et
un deuxième polymère obtenu par polymérisation d'un deuxième composant monomère contenant un (méth) acrylamide,
dans lequel le monomère vinylique présentant une structure cyclique carbonée contient un monomère vinylique contenant une structure alicyclique et un monomère vinylique contenant une structure de cycle aromatique,
dans lequel un rapport de teneur en monomère vinylique contenant une structure alicyclique est de 10 parties en masse ou plus et de 90 parties en masse ou moins par rapport à 100 parties en masse d'une quantité totale du monomère vinylique contenant une structure alicyclique et du monomère vinylique contenant une structure de cycle aromatique, et
dans lequel un rapport de teneur en monomère vinylique contenant une structure de cycle aromatique est de 10 parties en masse ou plus et de 90 parties en masse ou moins par rapport à 100 parties en masse de la quantité totale du monomère vinylique contenant une structure alicyclique et du monomère vinylique contenant une structure de cycle aromatique.

**2.** Ingrédient pour matériau de revêtement de séparateur de cellule secondaire selon la revendication 1,
dans lequel la masse du deuxième polymère est de 0,05 fois ou plus et de 5 fois ou moins la masse du premier polymère.

**3.** Ingrédient pour matériau de revêtement de séparateur de cellule secondaire selon la revendication 1,
dans lequel un rapport de teneur en monomère vinylique présentant une structure cyclique carbonée est de 3 parties en masse ou plus et de 70 parties en masse ou moins par rapport à 100 parties en masse du premier composant

monomère.

4. Ingrédient pour matériau de revêtement de séparateur de cellule secondaire selon la revendication 1, dans lequel un rapport de teneur en (méth)acrylamide est de 60 parties en masse ou plus et de 100 parties en masse ou moins par rapport à 100 parties en masse du deuxième composant monomère.

5. Ingrédient pour matériau de revêtement de séparateur de cellule secondaire selon la revendication 1, dans lequel le deuxième composant monomère contient en outre un monomère vinylique contenant un groupe carboxyle.

6. Procédé de production d'un ingrédient pour matériau de revêtement de séparateur de cellule secondaire comprenant les étapes consistant à :

obtenir un premier polymère obtenu par polymérisation d'un premier composant monomère contenant un (méth)acrylate d'alkyle et un monomère vinylique présentant une structure cyclique carbonée, et
obtenir un deuxième polymère obtenu par polymérisation d'un deuxième composant monomère contenant un (méth)acrylamide en présence du premier polymère,
dans lequel le monomère vinylique présentant une structure cyclique carbonée contient un monomère vinylique contenant une structure alicyclique et un monomère vinylique contenant une structure de cycle aromatique,
dans lequel un rapport de teneur en monomère vinylique contenant une structure alicyclique est de 10 parties en masse ou plus et de 90 parties en masse ou moins par rapport à 100 parties en masse d'une quantité totale du monomère vinylique contenant une structure alicyclique et du monomère vinylique contenant une structure de cycle aromatique, et
dans lequel un rapport de teneur en monomère vinylique contenant une structure de cycle aromatique est de 10 parties en masse ou plus et de 90 parties en masse ou moins par rapport à 100 parties en masse de la quantité totale du monomère vinylique contenant une structure alicyclique et du monomère vinylique contenant une structure de cycle aromatique.

7. Procédé de production d'un ingrédient pour matériau de revêtement de séparateur de cellule secondaire comprenant les étapes consistant à :

obtenir un deuxième polymère obtenu par polymérisation d'un deuxième composant monomère contenant un (méth)acrylamide, et
obtenir un premier polymère obtenu par polymérisation d'un premier composant monomère contenant un (méth)acrylate d'alkyle et un monomère vinylique présentant une structure cyclique carbonée en présence du deuxième polymère,
dans lequel le monomère vinylique présentant une structure cyclique carbonée contient un monomère vinylique contenant une structure alicyclique et un monomère vinylique contenant une structure de cycle aromatique,
dans lequel un rapport de teneur en monomère vinylique contenant une structure alicyclique est de 10 parties en masse ou plus et de 90 parties en masse ou moins par rapport à 100 parties en masse d'une quantité totale du monomère vinylique contenant une structure alicyclique et du monomère vinylique contenant une structure de cycle aromatique, et
dans lequel un rapport de teneur en monomère vinylique contenant une structure de cycle aromatique est de 10 parties en masse ou plus et de 90 parties en masse ou moins par rapport à 100 parties en masse de la quantité totale du monomère vinylique contenant une structure alicyclique et du monomère vinylique contenant une structure de cycle aromatique.

8. Matériau de revêtement de séparateur de cellule secondaire comprenant l'ingrédient pour matériau de revêtement de séparateur de cellule secondaire selon la revendication 1.

9. Matériau de revêtement de séparateur de cellule secondaire selon la revendication 8 comprenant en outre une charge inorganique et un dispersant.

10. Séparateur de cellule secondaire comprenant :

un film poreux et
un film de revêtement du matériau de revêtement pour séparateur selon la revendication 8 disposé sur au moins une surface du film poreux.

**11.** Procédé de production d'un séparateur de cellule secondaire comprenant une étape d'application du matériau de revêtement pour séparateur selon la revendication 8 sur au moins une surface d'un film poreux.

**12.** Séparateur de cellule secondaire comprenant :
une électrode positive, une électrode négative et le séparateur de cellule secondaire selon la revendication 10 disposé entre l'électrode positive et l'électrode négative.

**13.** Composition de résine comprenant :

un premier polymère obtenu par polymérisation d'un premier composant monomère contenant un (méth)acrylate d'alkyle et un monomère vinylique présentant une structure cyclique carbonée, et
un deuxième polymère obtenu par polymérisation d'un deuxième composant monomère contenant un (méth) acrylamide,
dans laquelle le monomère vinylique présentant une structure cyclique carbonée contient un monomère vinylique contenant une structure alicyclique et un monomère vinylique contenant une structure de cycle aromatique,
dans laquelle un rapport de teneur en monomère vinylique contenant une structure alicyclique est de 10 parties en masse ou plus et de 90 parties en masse ou moins par rapport à 100 parties en masse d'une quantité totale du monomère vinylique contenant une structure alicyclique et du monomère vinylique contenant une structure de cycle aromatique, et
dans laquelle un rapport de teneur en monomère vinylique contenant une structure de cycle aromatique est de 10 parties en masse ou plus et de 90 parties en masse ou moins par rapport à 100 parties en masse de la quantité totale du monomère vinylique contenant une structure alicyclique et du monomère vinylique contenant une structure de cycle aromatique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016072247 A
- JP 2018067406 A
- JP 2017212090 B
- JP 2014225465 A